## Europäisches Patentamt
## European Patent Office
## Office européen des brevets

(19)

(11) Veröffentlichungsnummer: **0 185 176**
**B1**

(12) # EUROPÄISCHE PATENTSCHRIFT

(45) Veröffentlichungstag der Patentschrift:
08.03.89

(51) Int. Cl.⁴: **F 16 D 25/10,** F 16 D 25/08

(21) Anmeldenummer: **85113797.6**

(22) Anmeldetag: **30.10.85**

(54) **Doppelkupplung für ein Kraftfahrzeuggetriebe.**

(30) Priorität: **20.12.84 DE 3446460**

(43) Veröffentlichungstag der Anmeldung:
**25.06.86 Patentblatt 86/26**

(45) Bekanntmachung des Hinweises auf die Patenterteilung:
**08.03.89 Patentblatt 89/10**

(84) Benannte Vertragsstaaten:
**DE FR GB IT NL SE**

(56) Entgegenhaltungen:
**DE-A-3 021 386**
**DE-A-3 138 208**
**DE-B-1 292 962**
**FR-A-1 432 853**
**FR-A-2 517 000**
**US-A-2 712 373**
**US-A-3 760 918**
**US-A-4 458 794**

(73) Patentinhaber: **Dr.Ing.h.c. F. Porsche Aktiengesellschaft, Porschestrasse 42, D-7000 Stuttgart 40 (DE)**

(72) Erfinder: **Rispeter, Siegfried, Uhlandstrasse 13, D-7122 Besigheim (DE)**

EP 0 185 176 B1

## Beschreibung

Die Erfindung betrifft eine hydraulisch betätigte, reibschlüssige Doppelkupplung nach dem Oberbegriff des Anspruchs 1.

Eine derartige Doppelkupplung, wie sie aus US-A-3 760 918 bekannt ist, kann verwendet werden, um ein Geschwindigkeitswechselgetriebe eines Kraftfahrzeugs ohne Zugkraftunterbrechung zu schalten. Hierbei ist eine zentrale Durchgangswelle zum Getriebe der einen Gruppe von Getriebegängen, z. B. dem 1., 3. und 5. Gang, eine hierzu konzentrische Hohlwelle, dem 2. und 4. Gang zugeordnet. Beide Wellen sind mit Kupplungsscheiben verbunden, von denen die eine von der einen Seite, die andere von der anderen Seite her an die axial unverschiebliche Festplatte des Kupplungsgehäuses anlegbar ist. Das Kupplungsgehäuse steht in Antriebsverbindung zur Kurbelwelle und rotiert mit ihr. Beim schnellen Umschalten von der einen auf die andere Getriebegruppe entstehen an den Kupplungsscheiben und an ihren Betätigungsgliedern sehr hohe Beschleunigungen. Um die dadurch verursachten Massenkräfte in Grenzen zu halten, ist man bestrebt, die Masse dieser Bauteile auf ein festigkeitsbedingtes Mindestmaß zu begrenzen.

Die Aufgabe der Erfindung besteht darin, durch eine besondere Anordnung und Gestaltung der Doppelkupplung und ihrer Betätigungsglieder ihr Schwungmoment und damit die bei Drehgeschwindigkeitsänderungen sich ergebenden Massenkräfte herabzusetzen.

Zur Lösung dieser Aufgabe dienen die kennzeichnenden Merkmale des Anspruchs 1.

Wenn die beiden Kupplungsscheiben über zwei parallel zueinander liegende dünnwandige Tellerfedern betätigt werden, lassen sich die umlaufenden Schwungmassen und damit auch die Massenkräfte sehr gering halten. Da die Tellerfedern an Außenringen von Wälzlagern befestigt sind, die auf den hydraulisch beaufschlagten, nahe der Zentralwelle in einen feststehenden Gehäuse angeordneten Ringkolben zentriert und fixiert sind, nimmt die hydraulische Betätigungsvorrichtung nicht an der Drehbewegung teil und erbringt keinen Anteil am Schwungmoment der Kupplung.

Weitere, die Erfindung ausgestaltende Merkmale, die sich mit der konstruktiven Ausgestaltung der Kraftübersetzung befassen, enthalten die Unteransprüche.

Ein Ausführungsbeispiel der Erfindung ist in der Zeichnung dargestellt und wird nachfolgend erläutert.

Es zeigt:

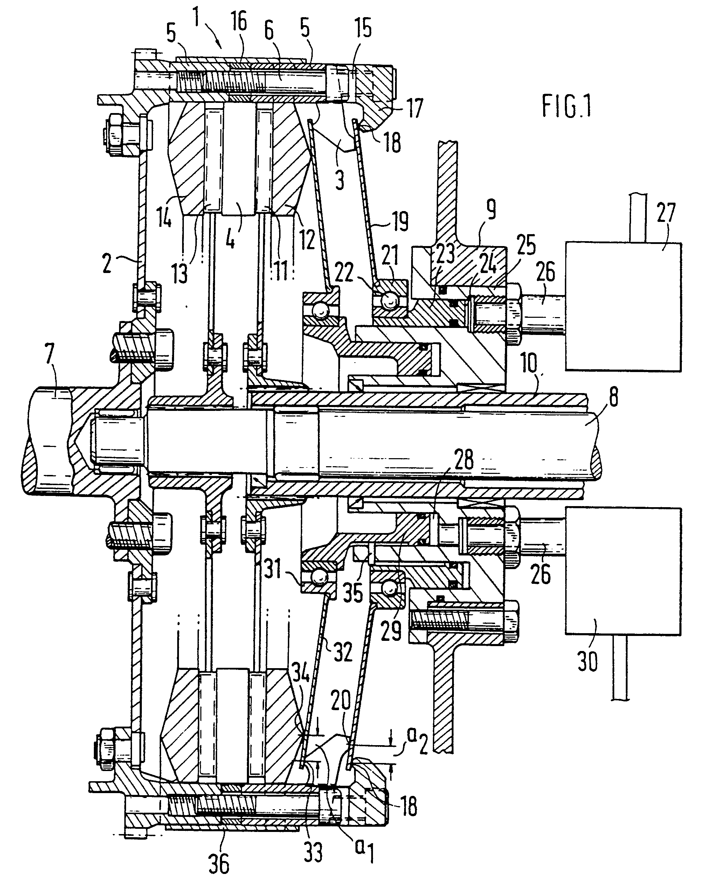

Fig. 1 Längsschnitt einer Doppelkupplung,

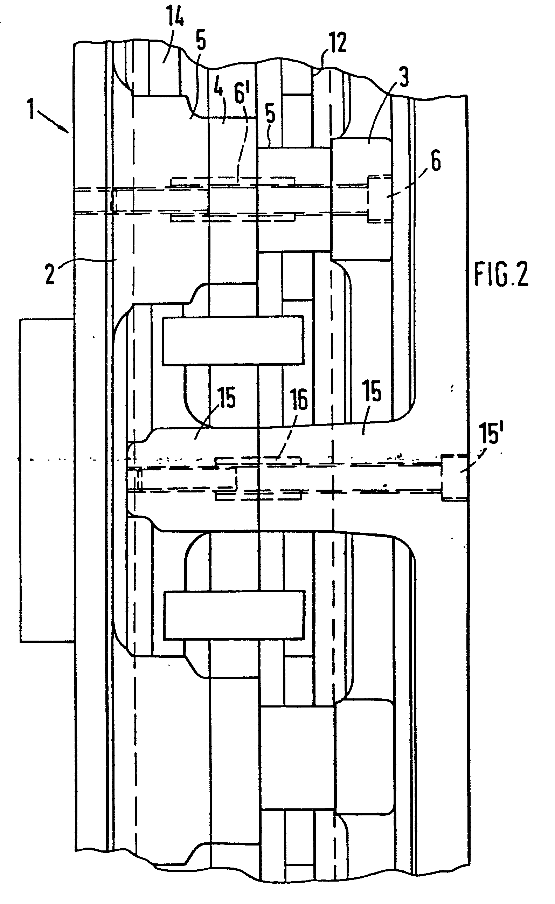

Fig. 2 Draufsicht auf die Doppelkupplung bei abgenommenem Mantel des Kupplungsgehäuses.

Ein Kupplungsgehäuse 1 ist aus einer aus mehreren Teilen bestehenden Mitnehmerplatte 2, einer Stützplatte 3 und einer mittigen Festplatte 4 zusammengesetzt. Hierzu sind an den Platten 2, 3 und 4 ringsum mehrere zueinander fluchtende Zapfen 5 angegossen, die eine Drehmomentmitnahme bewirken, mit Schrauben 6 miteinander verschraubt sind und durch Paßhülsen 6' fixiert sind. Die Mitnehmerplatte 2 ist an eine Motorkurbelwelle 7 angeflanscht, die das Kupplungsgehäuse 1 in Drehung versetzt. In der Kurbelwelle 7 ist eine durchgehende Zentralwelle 8 gelagert, die in ein Getriebegehäuse 9 hineinragt und zusammen mit einer zu ihr konzentrischen Hohlwelle 10 zum Antrieb der verschiedenen Gangstufen eines Geschwindigkeitswechselgetriebes eines Kraftfahrzeuges dient. Die Hohlwelle 10 ist mit einer Kupplungsscheibe 11 verbunden, die an der einen Seite der Festplatte 4 anliegt und an sie mit einer Druckplatte 12 andrückbar ist. An der anderen Seite der Festplatte 4 liegt eine weitere Kupplungsscheibe 13 an, die mit der Zentralwelle 8 verbunden ist und diese in Drehung versetzt, sobald sie durch eine Druckplatte 14 an die rotierende Festplatte 4 angedrückt wird. Auf die Druckplatte 14 wirken mehrere Zuganker 15 ein, die am Umfang des Kupplungsgehäuses 1 symmetrisch verteilt angeordnet und durch Paßbuchsen 16 zueinander fixiert sind. Die Zuganker 15 sind jeweils in einem Zugring 17 und an der Druckplatte 14 angebracht und durch Schrauben 15' miteinander verschraubt. Der Zugring 17 liegt an einer Angriffsstelle 18 am äußeren Rand einer Tellerfeder 19 an. Mit einem Hebelarm a2 zur Angriffsstelle 18 entfernt liegt die Tellerfeder 19 mit eine Abstützstelle 20 an der Stützplatte 3 an. An ihrem inneren Rand ist die Tellerfeder 19 im Außenring 21 eines Kugellagers 22 gehalten, dessen Innenring auf einem vorderen Absatz eines Ringkolbens 23 befestigt ist. Der mit O-Ringen nach innen und außen abgedichtete Ringkolben 23 ist in einen Ringraum 24 eines zylindrischen Hydraulikgehäuses 25 eingepaßt, das konzentrisch zur Zentralwelle 8 und dem Getriebegehäuse 9 zentriert und angeflanscht ist. Über eine am Ringraum 24 angeschlossene Hydraulikleitung 26 ist der Ringkolben 23 mit einem Druckspeicher 27 verbunden, dessen Druck entsprechend der gewünschten Schaltfunktion geregelt ist.

Konzentrisch zum Ringraum 24 enthält das Hydraulikgehäuse 25 einen zweiten Ringraum 28 kleineren Durchmessers, in den ein Ringkolben 29 eingepaßt ist, der über die Hydraulikleitung 26 von einem Druckspeicher 30 beaufschlagbar ist. An einem auf dem Ringkolben 29 befestigten Kugellager 31 ist eine Tellerfeder 32 gehalten. Am äußeren Rand hat sie eine Abstützstelle 33 zu einer Stützplatte 3 und mit einem Hebelarm a1 hierzu eine Angriffsstelle 34 zu der Druckplatte 12.

Durch einen radialen Stift 35 des Hydraulikgehäuses 25, der in Längsnuten der Ringkolben 23 und 29 eingreift, sind diese gegen Verdrehen gesichert. Sie können voneinander unabhängig mit Hydraulikdruck beaufschlagt werden und drücken dabei über die ihnen zugeordneten Betätigungselemente entweder die eine oder andere Kupplungsscheibe an die rotierende Festplatte 4 an, wobei entweder die Zentralwelle 8 oder die Hohlwelle 10 angetrieben wird.

Beide Druckplatten 12 und 14, die Mitnehmerplatte 2, die Stützplatte 3 sowie die Zuganker 15 und Zapfen 5 sind im Mantel 36 des Kupplungsgehäuses, der mit der Festplatte 4 einstückig ist, geführt.

Anstelle oder zusätzlich zur hydraulischen Kupplungsbetätigung kann ohne weiteres auch eine mechanische Kupplungsbetätigung verwirklicht werden. Dabei werden die Ringkolben über Schubstangen oder dergleichen von Hand verschoben. Dieser Vorteil einer wechselweisen Handbetätigung ist bei Ausfall oder Störung des Hydrauliksystems als Notmaßnahme von Bedeutung.

## Patentansprüche

1. Doppelkupplung zum wechselweisen Kuppeln einer Zentralwelle (8) und einer zu ihr konzentrischen Hohlwelle (10) eines Geschwindigkeitswechselgetriebes eines Kraftfahrzeuges mit dem durch die Motorkurbelwelle (7) angetriebenen Kupplungsgehäuse (1), wobei eine mit der Zentralwelle verbundene Kupplungsscheibe (13) von der einen Seite her, eine mit der Hohlwelle verbundene Kupplungsscheibe (11) von der anderen Seite her an eine mittige Festplatte (4) des Kupplungsgehäuses mit Hydraulikkolben angedrückt werden, die als zueinander und zur Zentralwelle konzentrische Ringkolben (23, 29) gestaltet sind, in einem feststehenden Teil (25) einer Doppelkupplung angeordnet sind und von außerhalb liegenden Druckspeichern (27, 30) mit Hydraulikdruck beaufschlagbar sind, dadurch gekennzeichnet, daß die Ringkolben (23, 29) auf die Kupplungsscheiben (11, 13) über Tellerfedern (19, 32) einwirken, die an Außenringen von auf den Ringkolben (23, 29) befestigten Wälzlagern (22, 31) zentriert und fixiert sind.

2. Doppelkupplung nach Anspruch 1, dadurch gekennzeichnet, daß die Tellerfedern (19, 32) Abstützstellen (20, 33) an einer Stützplatte (3) des Kupplungsgehäuses (1) haben, die zu ihren Angriffsstellen (18, 34) zu den an den Kupplungsscheiben anliegenden Druckplatten (12, 14) Hebelarme (a1 bzw. a2) aufweisen.

3. Doppelkupplung nach Anspruch 2, dadurch gekennzeichnet, daß die Abstützstelle (33) der Tellerfeder (32) an ihrem äußeren Rand, ihre Angriffsstelle (34) mit einem Hebelarm (a1) radial nach innen gelegen ist.

4. Doppelkupplung nach Anspruch 3, dadurch gekennzeichnet, daß die Tellerfeder (19) an ihrem äußeren Rand eine Angriffsstelle (18) zu einem Zugglied (17) für die Druckplatte (14) und mit radialem Hebelarm (a2) nach innen eine Abstützstelle (20) an der Stützplatte (3) hat.

5. Doppelkupplung nach Anspruch 4, dadurch gekennzeichnet, daß das Zugglied aus einem Zugring (17) und mehreren gleichmäßig am Umfang des Kupplungsgehäuses (1) angeordneten Zugankern (15) und Schrauben (15') gebildet ist.

## Claims

1. Double clutch for alternately connecting a central shaft (8) and a hollow shaft (10) concentric thereto of a change - speed transmission of a motor vehicle to the clutch housing (1) driven by the engine crank shaft (7), a clutch disc (13) connected to the central shaft being pressed from one side and a clutch disc (11) connected to the hollow shaft being pressed from the other side against a central fixed plate (4) of the clutch housing by hydraulic pistons which are annular pistons (23, 29) concentric with respect to each other and to the central shaft, being located in a stationary part (25) of a double clutch and being able to be acted upon by hydraulic pressure from external pressure reservoirs (27, 30), characterised in that the annular pistons (23, 29) act on the clutch discs (11, 13) by way of plate springs (19, 32) which are centered and fixed on outer rings of roller bearings (22, 31) attached to the annular pistons (23, 29).

2. Double clutch according to Claim 1, characterised in that the plate springs (19, 32) have support points (20, 33) on a support plate (3) of the clutch housing (1), which have lever arms (a1 or a2) at their points of application (18, 34) on the pressure plates (12, 14) bearing against the clutch discs.

3. Double clutch according to Claim 2, characterised in that the support point (33) of the plate spring (32) is located on its outer edge, its point of application (34) with a lever arm (a1) being located radially inwards.

4. Double clutch according to Claim 3, characterised in that on its outer edge the plate spring (19) has a point of application (18) for a tension member (17) for the pressure plate (14) and with a radial lever arm (a2) towards the inside a support point (20) on the support plate (3).

5. Double clutch according to Claim 4, characterised in that the tension member is formed from a tension ring (17) and a plurality of tension ties (15) and screws (15') located uniformly on the periphery of the clutch housing (1).

## Revendications

1. Embrayage double pour accoupler alternativement un arbre central (8) et un arbre creux (10), concentrique par rapport à lui, d'une boîte de vitesses de véhicule automobile comportant le carter d'embrayage (1) entraîné par le vilebrequin (7), un disque d'embrayage (3) relié à l'arbre central d'un côté, un disque d'embrayage (11) relié à l'arbre creux de l'autre côté pouvant et répréssé contre une plaque fixe centrale (4) du carter d'embrayage avec des pistons hydrauliques qui sont conformés en pistons annulaires (23, 29) concentriques l'un par rapport à l'autre et par rapport à l'arbre central, sont placés dans une partie fixe (25) d'un embrayage double et peuvent recevoir l'application de la pression hydraulique à partir d'accumulateurs de pression (27, 30) situés à l'extérieur, caractérisé en ce que les pistons annulaires (23, 29) agissent sur les disques d'embrayage (11, 13) par l'intermédiaire de ressorts Belleville (19, 32) qui sont centrés et fixés sur des bagues extérieures de roulement (22, 31) fixés sur les pistons annulaires (23, 29).

2. Embrayage double selon la revendication 1, caractérisé en ce que les ressorts Belleville (19, 32) comportent des points d'appui (20, 33) sur une plaque d'appui (3) du carter d'embrayage (1), qui présentent, pour leurs points d'application (18, 34) sur les plaques de pression (12, 14) en contact avec les disques d'embrayage, des bras de levier (a1, respectivement a2).

3. Embrayage double selon la revendication 2, caractérisé en ce que le point d'appui (33) du ressort Belleville (32) à son bord extérieur est positionné par rapport au point d'application (34), avec un bras de levier (a1), radialement vers l'intérieur.

4. Embrayage double selon la revendication 3, caractérisé en ce que le ressort Belleville (19) a, à son bord extérieur, un point d'application (18) sur un organe de traction (17) pour la plaque de pression (14) et, avec un bras de levier radial (a2) vers l'intérieur, un point d'appui (20) sur une plaque d'appui (3)

5. Embrayage double selon la revendication 4, caractérisé en ce que l'organe de traction est formé par un anneau de traction (17) et plusieurs tirants d'ancrage (15) et vis (15') répartis uniformément à la périphérie du carter d'embrayage (1).

FIG.1

FIG.2